# Europäisches Patentamt
# European Patent Office
# Office européen des brevets

(19)

(11) Numéro de publication: **0 028 554**
**B1**

(12) ## FASCICULE DE BREVET EUROPEEN

(45) Date de publication du fascicule du brevet:
04.04.84

(51) Int. Cl.³: **F 01 D 11/08**

(21) Numéro de dépôt: **80401470.2**

(22) Date de dépôt: **16.10.80**

(54) Anneaux à joint d'étanchéité refroidi et turbine à gaz équipée d'un tel anneau.

(30) Priorité: **26.10.79 FR 7926666**

(43) Date de publication de la demande:
**13.05.81 Bulletin 81/19**

(45) Mention de la délivrance du brevet:
**04.04.84 Bulletin 84/14**

(84) Etats contractants désignés:
**DE FR GB IT SE**

(56) Documents cités:
**FR - A - 1 547 085**
**FR - A - 2 407 343**
**GB - A - 1 308 771**
**US - A - 3 013 641**
**US - A - 3 425 665**
**US - A - 3 603 599**
**US - A - 3 719 365**
**US - A - 3 825 364**
**US - A - 3 834 001**
**US - A - 3 880 435**
**US - A - 4 135 851**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Tirole, Jacques Philippe Henri, 9, allée des Accacias, F-92310 Sevres (FR)**
Inventeur: **Mons, Claude Marcel, 1, rond point de la Corrèze, F-77176 Savigny le Temple (FR)**
Inventeur: **Spinat, Roland Roger, 64, avenue des Cigognes, F-91220 Bretigny-sur-Orge (FR)**

(74) Mandataire: **Moinat, François et al, S.N.E.C.M.A. Service des Brevets Boîte Postale 81, F-91003 Evry Cedex (FR)**

BUNDESDRUCKEREI BERLIN

## Anneaux à joint d'étanchéité refroidi et turbine à gaz equipée d'un tel anneau

L'invention est relative aux turbines à gaz et notamment aux turbines à gaz de turboréacteurs aéronautiques. Elle concerne plus spécialement un anneau à joint d'étanchéité à disposer autour d'une roue de turbine à gaz pour limiter les fuites de gaz au droit des extrémités des aubes.

D'une façon générale, le refroidissement des organes de turbine en contact avec les gaz moteurs permet d'accroître la température de combustion et par conséquent la puissance et le rendement du turboréacteur. En ce qui concerne les joints d'étanchéité en matériau susceptible d'être usiné par l'extrémité des aubes, on a déjà proposé de les refroidir par circulation forcée d'une fraction du débit d'air délivré par le compresseur au travers de pores ou d'interstices dudit matériau. Le brevet américain n° 3 825 364 décrit par exemple un anneau à joint d'étanchéité qui comporte en succession, de la périphérie vers l'axe:

a) un anneau-support disposé autour de la roue,

b) une première couche annulaire (que l'on dénommera pour l'instant »couche distributrice«) accrochée à cet anneau-support et faite d'un matériau perméable à l'air,

c) une deuxième couche annulaire (que l'on dénommera »couche d'usure«) fixée à l'intérieur de la couche distributrice, venant à proximité immédiate des extrémités des aubes de la roue et faite d'un matériau poreux à pores ouverts, usinable par ces extrémités d'aubes et insensible à l'action thermique et chimique des gaz actionnant la roue.

L'anneau-support est conformé de façon à ménager autour de la couche distributrice un passage annulaire. Des orifices ménagés dans cet anneau-support permettent de dériver vers ce passage annulaire une fraction du débit d'air du compresseur. La perméabilité à l'air de la couche d'usure est supérieure à celle de la couche distributrice qui est censée distribuer l'air de refroidissement d'une façon homogène au travers de la couche d'usure. Le fait que celle-ci soit plus perméable que la couche distributrice est censé permettre de maintenir le débit d'air à sa valeur initiale même si l'usinage par les extrémités d'aubes provoque une obstruction partielle des pores superficels de la couche d'usure.

Ce procédé de refroidissement de la couche d'usure par ciculation d'air au travers de celle-ci présente en fait des inconvénients notables qui font que le dispositif de l'art antérieur ci-dessus décrit n'atteint que partiellement son objet.

En effet,

— pour que l'air s'écoule avec un débit suffisant malgré la pression régnant dans la veine, il faut qu'il soit admis autour de la couche distributrice sous une pression relativement élevée (par exemple de l'ordre de 15 bars), ce qui affecte les performances du turboréacteur;

— en raison des variations de la pression des gaz durant la traversée de la roue, la répartition du débit d'air au travers de la couche d'usure n'est pas aussi homogène qu'on pourrait l'escompter; l'air se déplace dans la couche non seulement radialement (c'est-à-dire transversalement à la couche) mais aussi axialcment (c'est-à-dire parallèlement à l'axe de la roue) et l'écoulement axial contrarie l'écoulement radial;

— bien que, lorsque le joint est neuf, la perméabilité de la couche d'usure soit plus grande que celle de la couche ditributrice, les pores ou interstices superficiels de la couche d'usure s'obstruent plus ou moins à la longue, par pollution et par »tartirnage«, et le débit d'air de refroidissement risque de décroître de façon dangereuse;

— les choix des caractéristiques des deux couches sont étroitement liés car l'air de refroidissement les traverse toutes les deux maisson débit doit demeurer limité par la couche réfrigérante; ces choix résultent d'un compromis;

— enfin, le joint est plus épais que les joints de l'art antérieur du fait qu'à l'épaisseur de la couche d'usure s'ajoute celle de la couche distributrice et que celle-ci doit être suffisamment épaisse pour jouer son rôle de distributeur d'air.

De plus, le US-A-3 719 365 décrit un anneau à joint d'étanchéité pour roue de turbine dans lequel on trouve successivement de l'extérieur vers l'intérieur,

— un anneau support,
— une première couche annulaire percée de canaux radiaux,
— une couche séparatrice,
— et une couche d'usure percée de canaux fortement inclinés.

Ledit dispositif comportant d'autre part, des moyens d'admettre de l'air circulant dans la première couche.

La couche annulaire dite »couche séparatrice« est intercalée entre les deux autres couches, et est faite d'un matériau dont la perméabilité à l'air est telle que le débit d'air radial qui traverse cette couche séparatrice est sensiblement inférieur au débit d'air axial qui parcourt la première couche.

On remarque qui une partie du débit d'air admis dans la cavité et destiné au refroidissement de l'anneau même traverse radialement la première couche puis alimente la couche d'usure pour être injecté dans la veine avec une direction approximativement tangentielle à la surface de la garniture d'étanchéité. Une autre partie du débit de l'air de refroidissement s'échappe par des canaux semi-axiaux de la première couche annulaire. Cependant, cette partie de l'air n'est pas principalement destinée au refroidissement de l'anneau même.

L'anneau à joint d'étanchéité refroidi de l'invention est caractérisé en ce que des orifices d'admission sont ménagés à l'une extrémité de la virole entourant la couche réfrigérante et des orifices d'évacuation sont ménagés à l'autre extrémité pour permettre le passage axial de l'air réfrigérant au travers de toute la section de la couche réfrigérante, la couche d'usure étant ainsi essentiellement refroidie par conduction thermique au travers de ladite couche séparatrice.

Dans beaucoup de cas d'utilisation, le débit d'air radial peut d'ailleurs être nul, c'est-à-dire que la couche séparatrice est étanche.

Si l'on néglige, en première approximation, le faible débit d'air traversant éventuellement la couche séparatrice, on constate que celle-ci est refroidie à la fois par convention forcée de l'air circulant à son contact et par conduction thermique vers la couche réfrigérante, elle-même refroidie énergiquement par convection forcée. Quant à la couche d'usure elle est surtout refroidie par conduction vers la couche séparatrice. La perméabilité à l'air de la couche réfrigérante peut notamment être aussi grande qu'il est désirable, sans avoir à se soucier de la perméabilité de la couche d'usure. En outre, le refroidissement n'est pas affecté par un colmatage partiel de la couche d'usure.

On peut, comme on l'a déjà indiqué, utiliser une couche séparatrice totalement imperméable à l'air (en la constituant par exemple par un clinquant) ou laisser une certaine perméabilité (clinquant perforé). Dans le cas où la couche séparatrice est réalisée par projection au plasma, lorsque cette couche est obtenue on continue l'opération avec un réglage différent du chalumeau, ce qui confère au matériau d'usure une porosité différente de celle de la couche séparatrice bien qu'il s'agisse du même matériau. Lorsque la couche d'usure est constituée d'un matériau céramique, la couche séparatrice appliquée au chalumeau constituerait la couche d'ancrage du matériau d'usure. L'action refroidissante de l'air traversant la couche d'usure complète ainsi celle de la couche réfrigérante et l'on peut conférer à la couche séparatrice une perméabilité décroissante d'amont en aval de façon à obtenir une répartition homogène du débit radial malgré la variation de pression des gaz au passage de la roue.

La couche séparatrice agissant par conduction et non pas par diffusion thermique, il est intéressant de la rendre aussi mince que possible, dans une mesure compatible avec les possibilités de réalisation et les nécessités de tenue mécanique. Pour favoriser le refroidissement de la couche d'usure, on a également intérêt à rendre celle-ci aussi mince que possible dans la mesure compatible avec les déformations du rotor dues aux dilatations différentielles et aux faibles balourds provoqués par un fonctionnement normal. Ainsi, la couche séparatrice est sensiblement moins épaisse que la couche d'usure, elle-même sensiblement moins épaisse que la couche réfrigérante. Mais alors, et toujours dans le cadre de l'invention, il devient avantageux de constituer la couche réfrigérante également d'un matériau susceptible d'être usiné par l'extrémité des aubes et de constituer la couche séparatrice par une lame suffisamment mince et suffisamment ductile pour permettre facilement son ablation par les extrémités des aubes de la roue. En fonctionnement normal, le joint d'étanchéité est alors constitué par la couche d'usure proprement dite, mais, en cas de déplacement radial important de la roue (par exemple dans le cas d'un balourd important provoqué par la rupture d'une aube), la couche réfrigérante joue également un rôle complémentaire de couche d'usure de réserve par rapport à la couche d'usure normale.

En fin de compte, l'épaisseur totale de la couche composite constituée par la juxtaposition des trois couches élémentaires n'est pas plus grande que l'épaisseur d'une couche d'usure de l'art antérieur.

D'autres dispositions et les avantages qui en découlent seront évoqués dans la description qui suit d'un exemple de réalisation conforme à l'invention, en référence à la figure unique annexée qui représente à grande échelle une coupe radiale d'un dispositif illustrant cet exemple.

L'anneau-support 10 est disposé au droit de la roue de turbine. On aperçoit une extrémité 91 de l'une des aubes 90 de la roue. L'anneau-support 10 comporte une virole 11, une couronne amont 12 et une couronne aval 13 de telle sorte que sa section radiale forme un logement en U dont les branches sont orientées vers l'axe de la roue et qui contient les trois couches annulaires qui constituent le joint d'étanchéité de l'invention. Ces trois couches sont, de la périphérie vers l'axe:

– la couche réfrigérante 21, appliquée contre la paroi interne de la virole 11,
– la couche séparatrice 22, appliquée contre la couche réfrigérante 21,
– la couche d'usure 23 qui est appliquée contre la couche séparatrice 22 et qui affleure les bords internes des couronnes 12 et 13.

En fonctionnement normal, les extrémités d'aubes telles que 91 usinent la surface de la couche d'usure 23, ce qui fait qu'au repos un jeu J subsiste entre cette couche et lesdites extrémités d'aubes.

La couronne amont 12 déborde autour de la paroi externe de la virole 11. Dans la partie débordante 14 est ménagé un logement circulaire 15 qui coiffe un cordon annulaire 32 solidaire d'un voile 31 lui-même lié à l'enveloppe de la turbine. Cette n'est pas représentée.

La paroi externe de la virole 10 porte en aval, à une distance déterminée en amont de la couronne 13, une couronne externe 16 qui supporte une bride annulaire 17 qui déborde vers l'aval. Cette couronne 16 et la bride 17 s'insèrent dans l'orifice circulaire d'un voile 33 lié aussi à l'enveloppe de la turbine. Ce voile 33 porte une bride annulaire 34 qui entoure la bride 17. Un anneau élastique de fixation 35 à section courante en U permet de pincer l'une contre l'autre les brides 17 et 34 pour assujettir l'anneau-support 10.

Les deux voiles 31 et 33 délimitent un expace E1. En arrière du voile 33 se trove un espace E2 délimité par le voile 33, le carter de turbine ou tout autre moyen connu. L'espace E1 est alimenté en air de refroidissement venant du compresseur, non représenté. L'espace E2 communique avec la veine de gaz en aval de la roue. L'espace E1 est donc en surpression par rapport à l'espace E2. Des orifices d'admission d'air tels que 18 sont ménagés dans la virole 11 immédiatement en aval de la couronne 14 et mettent en communication la couche réfrigérante 21 et l'espace E1. Des orifices d'évacuation d'air tels que 19 sont ménagés dans ladite virole 11 en aval de la couronne 16 et mettent en communication ladite couche réfrigérante 21 et l'espace E2. Un flux d'air réfrigérant parcourt ainsi la couche 21 d'amont en aval, c'est-à-dire dans une direction axiale. La couche séparatrice 22 est refroidie par convection, grâce au contact avec le flux d'air, aussi et surtout par conduction, grâce au contact avec la couche réfrigérante 21 elle-même refroidie par l'air. On remarquera que les couches 21 et 22 coopèrent pour constituer un écran antithermique protégeant la virole 10 contre la chaleur des gaz traversant la roue.

Si la couche 21 est suffisamment épaisse, les orifices 19 ménagés dans la virole 11 peuvent être remplacés par des orifices ménagés dans la couronne 13, tel l'orifice 19' représenté en pointillé. La couronne 16 peut alors être reculée vers l'aval, dans la position 16', c'est-à-dire au droit de la couronne 13.

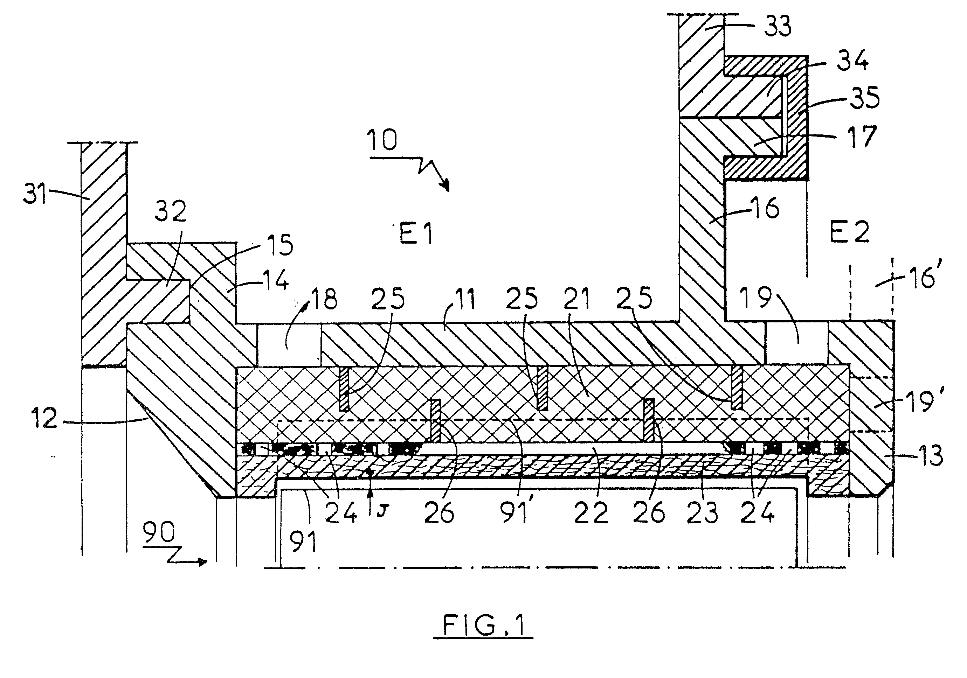

Eventuellement, le dispositif de la figure 1 comporte en outre les trois dispositions supplémentaires avantageuses que l'on va décrire ci-après.

La première de ces dispositions consiste à conférer à la couche séparatrice 22 une certaine perméabilité à l'air, en vue par exemple de refroidir la couche d'usure 23 non seulement par conduction mais aussi par convection. Cette perméabilité demeure cependent telle que le débit d'air radial s'écoulant au travers des couches 22 et 23 est sensiblement inférieur au débit d'air axial parcourant la couche 21. En vue d'assurer une répartition homogène du débit radial malgré la variation de pression des gaz qui se produit au passage de la roue, on peut avantageusement conférer à la couche 22 une perméabilité décroissante d'amont en aval. On a supposé sur la figure unique que la couche 22 est faite d'un matériau étanche. Elle est rendue perméable au moyen d'une pluralité de petits orifices 24 dont la densité, c'est-à-dire le nombre par unité de surface, est plus faible en aval qu'en amont.

La deusième disposition complémentaire consiste à insérer des déflecteurs dans la couche réfrigérante 21 afin d'accroître les échanges thermiques entre l'air et ladite couche pour améliorer le refroidissement de celle-ci. Ces déflecteurs consistent en des voiles en forme de couronne 25 et 26 alternativement insérés dans la couche 21. Les voiles 25 ont un diamètre extérieur égal au diamètre intérieur de la virole 11 et un diamètre intérieur sensiblement plus grand que le diamètre extérieur de la couche séparatrice 22. Les voiles 26 ont un diamètre extérieur sensiblement plus petit que le diamètre intérieur de la virole 11 et un diamètre intérieur égal au diamètre extérieur de la couche séparatrice 22. Outre leur fonction de déflecteurs, les voiles 26 agissent aussi comme radiateurs favorisant l'évacuation de la chaleur de ladite couche 22.

Une troisième disposition complémentaire consiste à constituer la couche réfrigérante 21 et la couche séparatrice 22 en des matériaux susceptibles d'être usinés par les extrémités s'aubes 91. Elle permet de reduire l'épaisseur de la couche d'usure 23 au minimum compatible avec un fonctionnement de la turbine dans les conditions convenables. En cas d'un balourd très important, dû par exemple à la rupture d'une ou de plusieurs aubes, les extrémités des aubes 91 restantes tracent leur chemin dans la couche 21, par exemple en 91'. On peut ainsi conférer à la couche composite formée par l'assemblage des trois couches élémentaires 21, 22 et 23, une épaisseur totale que ne dépasse pas l'épaisseur d'une couche de joint détanchéité de l'art antérieur. Si des voiles 25 et 26 sont présents, les voiles 26 doivent alors eux aussi être faits d'un matériau susceptible d'être usiné par les extrémités d'aubes.

On donne ci-»près des exemples relatifs à la constitution et à la réalisation des éléments du joint de la figure 1. On rapelle cependant que, en raison de l'indépendance des fonctions des différentes couches de ce joint, on dispose d'une certaine latitude dans le choix des matériaux.

La couche réfrigérante 21 est brasée sur la virole 11 et est constituée par une mousse ou un matériau fritté en alliage à base nickel-chrome.

La couche séparatrice 22 peut être réalisée au moyen d'un clinquant (perforé ou non) en alliage ductile, par exemple un alliage nickel-chrome, brasé sur la couche 21, ou encore par projection au plasma d'un alliage, par exemple à base nickel-chrome.

Le matériau de la couche d'usure 23 peut par exemple être un feutre réfractaire en alliage à base nickel-chrome lié par brasage et diffusion à la couche séparatrice 22 o encore un dépôt d'alliage nickel-chrome réalisé par projection de plasma. Dans le cas où la couche séparatrice est réalisée au moyen d'un chalumeau à plasma, la couche séparatrice et la couche d'usure peuvent être constituées d'un même matériau mais d'un module différent.

Les voiles 25 sont en clinquant d'alliage nickel-chrome et sont brasés sur la virole 11. Quant aux voiles 26, ils sont réalisés »in situ« par usinage de rainures dans la couche réfrigérante 21 et par recharge de ces rainures au moyen d'un dépôt d'alliage nickel-chrome par chalumeau à plasma. Les voiles 26 peuvent également être réalisés par fusion, par exemple par bombardement par faisceaux d'électrons.

On donne enfin, pour terminer la présente description, des indications sur les épaisseurs à assigner aux defférentes couches dans la plupart des cas:

—  couche réfrigérante  21 : 3 à 10 mm  et de préférence 5 à 6 mm;
—  couche séparatrice 22 : 0,1  à 0,5 mm et de préférence 0,1 à 0,2 mm;
—  couche  d'usure  23 : 0,5  à  3 mm  et de préférence 1 à 1,5 mm.

## Revendications

1. Anneau à joint d'étanchéité refroidi pour roue de turbine à gaz, du genre comportant successivement, de la périphérie vers l'axe:

—  un anneau support (10) entourant la roue,
—  une première couche annulaire dite »couche réfrigérante« (21) accrochée à cet anneau support (10) et faite d'un matériau perméable à l'air,
—  une  deuxième  couche  annulaire  dite »couche d'usure« (23) venant à proximité immédiate des extrémités des aubes (91) de la roue et faite d'un matériau susceptible d'être usiné par ces extrémités d'aubes et insensible à l'action thermique et chimique des gaz actionnant la roue,
—une troisième couche annulaire dite »couche séparatrice« (22) intercalée entre les deux autres couches (21.23)

ledit dispositif comportant d'autre part des moyens d'admettre de l'air circulant dans la couche réfrigérante (21) dans lequel la troisième couche annulaire dite »couche séparatrice« (22) intercalée entre les deux autres couches (21, 22) est faite d'une matériau dont la perméabilité à l'air est telle que le débit d'air radial qui traverse cette couche séparatrice (22) est sensiblement inférieur au débit d'air axial qui parcourt la couche réfrigérante caractérisé en ce que des orifices d'admission (18) sont ménagés à l'une extrémité de la virole (11) entourant la couche réfrigérante et des orifices d'évacuation (19) sont ménagés à l'autre extrémité pour permettre évacuation (19) sont ménagés à l'autre extrémité pour permettre le passage axial de l'air réfrigérant au travers de toute la section de la couche réfrigérante, la couche d'usure étant ainsi essentiellement refroidie par conduction thermique au travers de ladite couche séparatrice.

2. Anneau à joint d'étanchéité selon la revendication 1, caractérisé en ce que la couche séparatrice (22) est imperméable à l'air.

3. Anneau d'étanchéité selon la revendication 2, caractérisé en ce que la couche séparatrice (22) est formée d'un clinquant.

4. Anneau à joint d'étanchéité selon la revendication 2, caractérisé en ce que la couche séparatrice (22) est un dépôt obtenu par projection au plasma sur la couche réfrigérante (21).

5. Anneau à joint d'étanchéité selon la revendication 1, caractérisé en ce que la perméabilité à l'air de la couche séparatrice (22) décroît de l'amont de la roue à l'aval de la roue.

6. Anneau à joint d'étanchéité selon la revendication 5, caractérisé en ce que la couche séparatrice (22) est formée d'un clinquant perforé.

7. Anneau à joint d'étanchéité selon l'une quelconque des revendications 1 à 6, caractérisé en ce que la couche séparatrice (22) est sensiblement moins épaisse que la couche d'usure (23) elle-même sensiblement moins épaisse que la couche réfrigérante (21).

8. Anneau à joint d'étanchéité selon la revendication 7, caractérisé en ce que les matériaux de la couche séparatrice (22) et de la couche réfrigérante (21) sont euxmêmes susceptibles d'être usinés par les extrémités des aubes (91) de la roue et en ce que les épaisseurs des trois couches sont telles que, en fonctionnement normal, lesdites extrémités sont hors de contact avec la couche séparatrice (22).

9. Anneau à joint d'étanchéité selon l'une quelconque des revendications 1 à 8, caractérisé en ce qu'il comporte en outre des voiles minces (25, 26) déflecteurs en forme de couronnes insérés dans la couche réfrigérante, à savoir:

—  au moins un voile (25) de diamètre extérieur égal au diamètre intérieur de l'anneau-support (10) et de diamètre intérieur plus grand que le diamètre extérieur de la couche séparatrice (22) et
—  au moins un voile (26) de diamètre extérieur inférieur au diamètre de l'anneau support (10) et de diamètre intérieur égal au diamètre extérieur de la couche séparatrice (22).

10. Turbine à gaz de turboréacteur, caractérisée en ce qu'elle est équipée d'un anneau à joint d'étanchéité conforme à l'une quelconque des revendications 1 à 9.

## Patentansprüche

1. Gekühlter Dichtring für ein Gasturbinenrad, der von der Peripherie aus in Richtung auf die Achse aufeinanderfolgend

— einen das Rad umschließenden Stützring (10).
— eine an dem Stützring (10) haftende erste ringförmige Schicht (21), die eine »Kühlungsschicht« bildet und aus einem luftdurchlässigen Material besteht,
— eine in die unmittelbare Nähe der Enden der Schaufeln (91) des Rades heranreichende zweite ringförmige Schicht (23), die eine »Verschleißschicht« bildet und die aus einem Material besteht, das von den Schaufelenden abtragbar und gegenüber der thermischen chemischen Wirkung des das Rad antreibenden Gases unempfindlich ist,
— sowie eine dritte ringförmige Schicht (22), die als »Trennschicht« zwischen den beiden anderen Schichten (21, 34) angeordnet ist,

umfaßt, wobei die Vorrichtung Mittel zur Zuführung von in der Kühlschicht (21) zirkulierender Luft aufweist und wobei die zwischen den beiden anderen Schichten (21, 23) angeordnete Trennschicht (22) aus einem Material hergestellt ist, dessen Luftdurchlässigkeit derart beschaffen ist, daß der durch diese Trennschicht (22) hindurchtretende radiale Luftdurchsatz wesentlich kleiner ist als der durch die Kühlungsschicht strömende axiale Luftdurchsatz, dadurch gekennzeichnet, daß ein dem einen Endbereich des die Kühlungsschicht umschließenden Ringmantels (11) Einlaßöffnungen (18) und in seinem anderen Endbereich Auslaßöffnungen (19) angebracht sind, so daß ein axialer Durchtritt von Kühlluft über den gesamten Querschnitt der Kühlungsschicht ermöglicht ist und somit eine wesentliche Kühlung der Verschleißschicht mittels Wärmeleitung durch die Trennschicht hindurch erfolgt.

2. Dichtring nach Anspruch 1, dadurch gekennzeichnet, daß die Trennschicht (22) luftundurchlässig ist.

3. Dichtring nach Anspruch 2, dadurch gekennzeichnet, daß die Trennschicht (22) aus einer Metallfolie gebildet ist.

4. Dichtring nach Anspruch 2, dadurch gekennzeichnet, daß die Trennschicht (22) eine durch Plasmaniederschlag auf der Kühlungsschicht (21) erzeugte Ablagerung ist.

5. Dichtring nach Anspruch 1, dadurch gekennzeichnet, daß die Luftdurchlässigkeit der Trennschicht (22) von der Hochdruckseite des Rades zur Niederdruckseite des Rades abnimmt.

6. Dichtring nach Anspruch 5, dadurch gekennzeichnet, daß die Trennschicht (22) von einer perforierten Metallfolie gebildet ist.

7. Dichtring nach einem der Ansprüche 1 bis 6, dadurch gekennzeichnet, daß die Trennschicht (22) wesentlich weniger stark ist als die Verschleißschicht (23), die ihrerseits wesentlich weniger stark ist als die Kühlungsschicht (21).

8. Dichtring nach Anspruch 7, dadurch gekennzeichnet, daß die Materialien der Trennschicht (22) und der Kühlungsschicht (21) selbst ebenfalls von den Enden der Schaufeln (91) des Rades abtragbar sind und daß die Dicken der drei Schichten so beschaffen sind, daß die Enden der Schaufeln bei normalem Betrieb außer Berührung mit der Trennschicht (22) sind.

9. Dichtring nach einem der Ansprüche 1 bis 8, dadurch gekennzeichnet, daß dünne als Abweiselemente dienende Trennwandungen (25, 26) in Form von in die Kühlungsschicht eingefügten Ringen vorgesehen sind, die

— aus wenigstens einer Trennwandung (25), deren Außendurchmesser dem Innendurchmesser des Stützringes (10) entspricht und deren Innendurchmesser größer ist als der Außendurchmesser der Trennschicht (22).
— sowie aus wenigstens einer Trennwandung (26), deren Außendurchmesser kleiner ist als der Innendurchmesser des Stützringes (10) und deren Innendurchmesser dem Außendurchmesser der Trennschicht (22) entspricht,

bestehen.

10. Turboreaktor-Gasturbine, dadurch gekennzeichnet, daß sie mit einem Dichtring nach einem der Ansprüche 1 bis 9 ausgestattet ist.

## Claims

1. Cooled sealing ring for a gas turbine wheel, of the kind comprising successively, from the periphery towards the axis;

— a support ring (10) surrounding the wheel,
— a first annular layer termed the »refrigerant layer« (21) secured to this support ring (10) and made of a material permeable to air,
— a second annular layer termed the »wear layer« (23) lying in immediate proximity with the ends of the blades (91) of the wheel and made of a material capable of being worn by blade tips and insensitive to thermal and chemical action of the gases driving the wheel,
— a third annular layer termid the »separating layer« (22) interposed between the two other layers (21, 23)

said device comprising on the other hand means for admitting circulating air into the refrigerant layer (21) in which the third annular layer termed the »separating layer« (22) interposed between the two other layers (21, 22) is made of a material of which the permeability to air is such that the radial air flow which traverses this separating layer (22) is substantially less than the axial air flow which flows over the refrigerant layer, characterised in this that inlet orifices (18) are formed at one end of the annular member (11) surrounding the refrigerant layer and outlet orifices (19) are formes at the other end in order to enable the axial passage of refrigerant air through the whole of the section of the refrigerant layer, the wear layer being thus cooled by essentially thermal conduction through the said separating layer.

2. Sealing ring according to claim 1, characterised in this that the separating layer (22) is impermeable to air.

3. Sealing ring according to claim 2, characterised in this that the separating layer (22) is made of a foil.

4. Sealing ring according to claim 2, characterised in this that the separating layer (22) is a deposit produced by plasma projection on to the refrigerant layer (21).

5. Sealing ring according to claim 1, characterised in this that the permeability to air of the separating layer (22) decreases from upstream of the wheel to downstream of the wheel.

6. Ring seal according to claim 5, characterised in this that the separating layer (22) is formed by a perforated foil.

7. Ring seal according to any one of claims 1 to 6, characterised in this that the separating layer (22) is substantially less thick than the wear layer (23), itself substantially less thick than the refrigerant layer (21).

8. Ring seal according to claim 7 characterised in this that the materials of the separating layer (22) and of the refrigerant layer (21) are themselves capable of being worn by the tips of the blades (91) of the wheel and in this that the thicknesses of the three layers are such that, under normal operation conditions the said ends are out of contact with the separating layer (22).

9. Ring seal according to any one of claims 1 to 8, characterised in this that it comprises in addition thin deflector baffles (25, 26) in the form of inserted rings within the refrigerant layer, namely:

—   at least one baffle (25) having an outer diameter equal to the inner diameter of the support ring (10) and of inner diameter larger than the outer diameter of the separating layer (22) and
—   at least one baffle (26) of outer diameter less than the inner diameter of the support ring (10) and of inner diameter equal to the outer diameter of the separating layer (22).

10. Gas turbine for a jet engine, characterised in this that it is equipped with a ring seal according to one of claims 1 to 9.

FIG.1